# EUROPÄISCHE PATENTSCHRIFT

(11) **EP 1 884 804 B1**
(45) Veröffentlichungstag und Bekanntmachung des Hinweises auf die Patenterteilung: **25.03.2009**
(21) Anmeldenummer: 07110148.9
(22) Anmeldetag: 13.06.2007
(51) Int. Cl.: G01S 17/46

(54) **Entfernungsmessgerät**
Distance measuring device
Appareil de mesure de distance

(30) Priorität: 28.07.2006 DE 102006034926
(43) Veröffentlichungstag der Anmeldung: 06.02.2008
(73) Patentinhaber: SICK AG, 79183 Waldkirch (DE)
(72) Erfinder: Mack, Dr. Stefan, 79108 Freiburg (DE)
(74) Vertreter: Ludewigt, Christoph

(56) Entgegenhaltungen:
- EP-A- 1 246 148
- DE-A- 3 618 624
- DE-A1- 3 513 671
- DE-A1- 4 340 756
- DE-C1- 4 002 356
- GB-A- 2 395 261
- JP-A- 2006 184 065
- US-A1- 2002 125 435
- US-A1- 2004 005 092

## Beschreibung

Die Erfindung betrifft ein optoelektronisches Entfernungsmessgerät nach dem Oberbegriff des Anspruchs 1.

Derartige optoelektronische Entfernungsmessgeräte werden beispielsweise dazu verwendet, um den Abstand eines Objektes zum Entfernungsmessgerät innerhalb eines vorgegebenen Messbereiches auf optoelektronischem Wege zu ermitteln. Auf diese Weise können zum Beispiel Objekte auf einem Förderband nach deren Größe klassifiziert oder die Füllstände von Behältern erfasst und an eine Zentrale gemeldet werden.

Die für diese Aufgaben bekannten optoelektronischen Entfernungsmessgeräte können, abhängig von der angewandten Technologie, grob in zwei Gruppen eingeteilt werden. Die eine Gruppe der Messgeräte ermittelt den Abstand nach dem Triangulationsmessverfahren (Beispiel: DE 35 13 671 C2). Beim Triangulationsmessverfahren wird ein gebündelter Lichtstrahl von dem Entfernungsmessgerät in Richtung eines Objektes ausgesendet. Nach dem Auftreffen des Lichtstrahls auf das Objekt wird ein Teil dieses Lichts in einem Streulichtkegel zurückgeworfen. Ein Ausschnitt aus dem Streulichtkegel wird von einem Lichtempfänger aufgenommen, der in einem definierten Abstand zum Lichtsender angebracht ist. Der im Triangulationsmessgerät eingesetzte Lichtempfänger ist dabei in der Lage festzustellen, unter welchem Winkel das am Objekt zurückgeworfene Licht in den Lichtempfänger einfällt.

Lichtsender, Objekt und Lichtempfänger bilden somit ein Dreieck, bei welchem die Basis, d. h. der Abstand zwischen Lichtsender und Lichtempfänger bekannt ist.

Aus dem mit dem Lichtempfänger gemessenen Winkel zwischen dem ausgesandten und dem empfangen Lichtstrahl kann damit die Entfernung zum Objekt bestimmt werden.

Die zweite Gruppe benutzt zur Abstandsermittlung die Lichtlaufzeit. Wie zum Beispiel in der DE 40 02 356 C1 beschrieben wird von einer Lichtquelle ein Lichtstrahl in Richtung einer Messstrecke ausgesandt. Trifft dieser Lichtstrahl auf ein Objekt, so wird eine gewisse Teilmenge wieder in die Ausgangsrichtung zurückreflektiert. In unmittelbarer Nähe zur Lichtquelle ist ein Lichtempfänger angeordnet, der das am Objekt reflektierte Licht empfängt und in elektrische Signale umwandelt. Aus der Zeit, die zwischen dem Aussenden des Lichtstrahles und dem Empfang des reflektierten Lichtstrahles vergangen ist, kann dann unter Berücksichtigung der Lichtgeschwindigkeit die Entfernung des Objektes zum Entfernungsmessgerät ermittelt werden. Zur Entfernungsmessung nach diesem Lichtlaufzeitverfahren wird sowohl das in der DE 40 02 356 C1 beschriebene Phasenmessverfahren, als auch das Pulslaufzeitmessverfahren, welches beispielsweise in der DE 43 40 756 C2 beschrieben ist, eingesetzt.

Der Begriff "Licht" ist dabei nicht auf das sichtbare Licht beschränkt. Unter "Licht" sind allgemein elektromagnetische Strahlen, also UV-Licht, lR-Licht sowie sichtbares Licht zu verstehen, welche üblicherweise für den Betrieb optoelektronischer Sensoren eingesetzt werden können.

Nachteilig an den bekannten Entfernungsmessgeräten, die nach dem Triangulationsmessverfahren arbeiten, ist, dass diese Messgeräte insbesondere bei geringem Basisabstand zwischen dem Lichtsender und dem Lichtempfänger nur eine geringe Messgenauigkeit aufweisen. Eine Erhöhung des Basisabstandes zur Verbesserung der Messgenauigkeit hingegen hat zur Folge, dass das Entfernungsmessgerät eine beträchtliche Baugröße einnimmt. Bei den Entfernungsmessgeräten, die den Objektabstand mit Hilfe der Lichtlaufzeit ermitteln (Pulslaufzeit oder Phasenmessung), sind die Herstellkosten, die aufgrund der sehr kurzen Zeiten, welche mit hoher Genauigkeit ermittelt werden müssen, sehr hoch, so dass derartige Entfernungsmessgeräte oft aus Kostengründen nicht zum Einsatz kommen.

Aus der GB 2395261 A ist ein Entfernungsmessgerät bekannt.. Zur Entfernungsmessung werden die Positionen von unterschiedlichen Lichtpunkte ausgewertet und um die Punkte unterscheidbar zu machen, haben die Punkte unterschiedliche Formen.

Aus der DE 3618624 A1 ist ein Kamerasystem bekannt, bei der ein definiertes durch Lichtquellen erzeugtes Schattenbild auf einem Hindernis erzeugt wird und aus der Form des mit der Kamera erfassten Schattenbildes auf Entfernung, Form und Neigung des Hindernisses geschlossen werden kann.

Aus der JP 2006-184065 ist ein Fotoapparat bekannt, mit einer Blendensteuerung und einer multifokalen Linse, um mittels der Blende jeweils den Teil der Linse zu öffnen, der die gewünschte Brennweite hat.

Der Erfindung liegt die Aufgabe zugrunde, ein kleinbauendes, kostengünstiges Entfernungsmessgerät zu schaffen, mit dem innerhalb eines großen Messbereiches Objektabstände ermittelt werden können.

Die Lösung der Aufgabe erfolgt durch die Merkmale des Anspruchs 1. Danach wird die Sendeoptik in der Beleuchtungseinheit des optoelektronischen Entfemungsmessgerätes mit einer Strahlformungsoptik ausgestattet. Dadurch werden auf den Objekten, die sich im Messbereich befinden, in unterschiedlichen Messabständen unterschiedliche Beleuchtungsmuster erzeugt. In einem vorzugsweise daneben angeordneten Bildaufnehmer wird über eine Empfängeroptik ein Abbild von dem angeleuchteten Objekt erzeugt. In der Bildebene der Empfängeroptik befindet sich ein Detektorarray, mit dem das optische Abbild in entsprechende elektrische Signale umgesetzt wird. Diese Empfangssignale vom Detektorarray werden einer Signalverarbeitungseinheit zugeführt, in der Mittel vorhanden sind, um aus dem Abbild der Beleuchtungsmuster eine Entfernungsangabe für den Abstand des Objektes zum Entfernungsmessgerät zu generieren.

Der Vorteil dieser Erfindung ist darin zu sehen, dass sich mit dem Einsatz einer Strahlformungsoptik das von der Beleuchtungseinheit auf einem Objekt erzeugte Beleuchtungsmuster mit zunehmendem Abstand verändert. Dieses abstandsabhängige Beleuchtungsmuster wird von dem Bildaufnehmer, der eine sehr hohe Schärfentiefe besitzt, erfasst und ausgewertet. Dadurch kann auf einfache Art und Weise eine Abstandsinformation gewonnen werden.

Dabei besteht die Strahlformungsoptik aus einer in mehrere räumlich getrennte, jedoch auf eine Gesamtachse zentrierte Mehrzonenanordnung. Jede dieser Zonen besitzt dabei eine von den anderen Zonen abweichende Strahlformungseigenschaft. Von jeder Zone der Strahlformungsoptik wird somit ein Teilbeleuchtungsbündel mit einem eigenen Strahlquerschnittsprofil erzeugt. Mit fortschreitendem Abstand von der Strahlformungsoptik überlagern sich diese Teilbeleuchtungsbündel, bzw. diese unterschiedlichen Strahlquerschnittsprofile derart, dass in der Summe ein Beleuchtungslichtbündel entsteht, das in seiner Ausbreitungsrichtung einen ganz charakteristischen Strahlquerschnittsverlauf einnimmt.

Bevorzugt ist es, wenn die einzelnen Zonen der Strahlformungsoptik eine rotationssymmetrische Form von Kreissegmenten oder Ringen aufweisen. Dadurch ist es gewährleistet, dass das resultierende Beleuchtungslichtbündel seine unterschiedlichen Beleuchtungsmuster in symmetrischer Weise über den Abstand verändert.

In einer speziellen Ausführungsform der Erfindung ist in jeder Zone bei der Strahlformungsoptik eine Zylinderlinse angeordnet, wobei jede dieser Zylinderlinsen eine zu den anderen Zylinderlinsen unterschiedliche Brennweite und Zylinderachslage hat. Dadurch wird beispielsweise aus einem kollimierten Lichtstrahl von jeder Zone der Strahlformungsoptik in einem anderen Abstand als ein Lichtstrich erzeugt, wobei jeder dieser Lichtstriche eine andere Drehausrichtung aufweist.

Ein Ausführungsbeispiel der Erfindung ist in der Zeichnung dargestellt und wird anhand der Figuren nachfolgend näher erläutert. Im Einzelnen zeigen:
- Fig. 1: eine schematische Schnittdarstellung eines optoelektronischen Entfernungsmessgeräts mit einer Beleuchtungseinheit und einem Bildaufnehmer.
- Fig. 2: eine schematische Draufsicht auf eine Strahlformungsoptik in der Ausführungsvariante einer Vierzonenoptik.
- Fig. 3: eine schematische Darstellung auf mehrere sich mit dem Abstand zum Entfernungsmessgerät ändernde Beleuchtungsmuster.

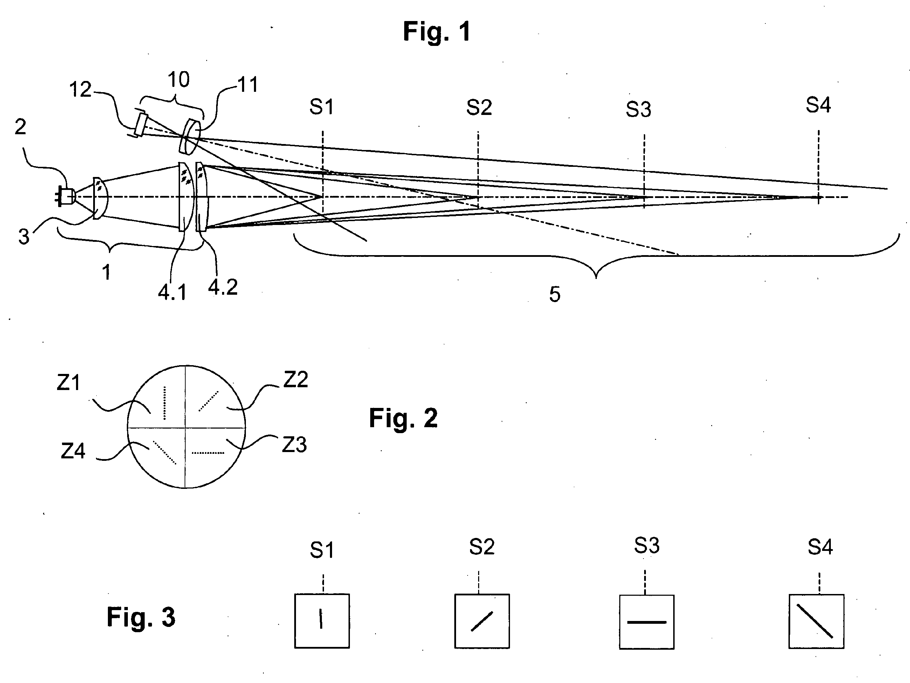

In der schematischen Schnittdarstellung von Figur 1 ist eine Beleuchtungseinheit 1 sowie ein Bildaufnehmer 10 dargestellt. Die Beleuchtungseinheit 1 sowie der Bildaufnehmer 10 sind dabei in unmittelbarer Nähe zueinander angeordnet, so dass zwischen den optischen Achsen von Beleuchtungseinheit 1 und Bildaufnehmer 10 nur ein geringer Winkel vorhanden ist. Prinzipiell ist es aber auch möglich, dass die Beleuchtungseinheit 1 sowie der Bildaufnehmer 10 mit Hilfe eines Strahlteilerspiegels oder eines geometrischen Auskoppelspiegels voneinander getrennt werden, so dass deren optische Achsen außerhalb des Entfernungsmessgeräts parallel verlaufen. Die Beleuchtungseinheit 1 besitzt eine Lichtquelle 2 sowie eine dazu ausgerichtete Sendeoptik. Die Lichtquelle 2 ist vorzugsweise eine Halbleiterlichtquelle, d. h. ein Laser oder eine LED, was aber nicht ausschließt, dass auch andere Lichtquellen verwendet werden können. Die Sendeoptik besteht bei der in Fig. 1 dargestellten Variante aus einer Kollimatorlinse 3 sowie einer, aus einer Sendelinse 4.1 und einer Mehrzonenlinse 4.2 zusammengesetzten zweigliedrigen Strahlformungsoptik. Die Kollimatorlinse 3 und die Strahlformungsoptik leiten das von der Lichtquelle 2 ausgesandte Licht in einen Messbereich 5.

Die wesentlichen Komponenten im Bildaufnehmer 10 sind eine Empfängeroptik 11 sowie ein zweidimensionales Detektorarray 12. Das Detektorarray 12 besteht aus einer Vielzahl von lichtempfindlichen Elementen, die beispielsweise in CMOS- oder CCD-Technologie matrixförmig aufgebaut sind. Die Empfängeroptik 11 bildet Objekte, die sich im Messbereich 5 vor der Strahlformungsoptik 4 befinden, auf dem Detektorarray 12 ab. Die Empfängeroptik 11 ist so dimensioniert, dass sie über eine große Schärfentiefe verfügt, d. h. jedes Objekt innerhalb des gesamten Messbereichs 5 wird ausreichend scharf auf dem Detektorarray 12 abgebildet. Um dies zu erreichen, hat die Empfängeroptik 11 beispielsweise eine geringe numerische Apertur oder ist als adaptive Optik mit hohem Schärfetiefebereich ausgeführt.

Die Draufsicht auf die Mehrzonenlinse 4.2 der zweigliedrigen Strahlformungsoptik zeigt, dass in diesem Beispiel die Mehrzonenlinse 4.2 geometrisch in vier gleichgroße Viertelkreise Z1 bis Z4 aufgeteilt ist. Jeder Viertelkreis Z1 bis Z4 entspricht einer Zone und ist mit einer eigenen Zylinderlinse ausgestattet. Dabei unterscheiden sich die Zylinderlinsen in den vier viertelkreisförmigen Zonen Z1 bis Z4 voneinander dadurch, dass jede dieser Zylinderlinsen eine unterschiedliche Brennweite und eine unterschiedliche Zylinderachslage besitzt. So hat zum Beispiel die Zylinderlinse in der Viertelkreiszone Z1 die kürzeste Brennweite und die Achse dieses Zylinders verläuft vertikal, während der Zylinder in der Viertelkreiszone Z4 die längste Brennweite hat und die Achse des Zylinders in der Viertelkreiszone Z4 horizontal verläuft.

Die optische Auswirkung dieser unterschiedlichen Zylinderlinsen in den vier viertelkreisförmigen Zonen Z1 bis Z4 auf den Strahlquerschnittsverlauf des ausgesandten Lichtes innerhalb des Messbereichs 5 soll anhand der Fig. 3 näher erläutert werden. Wie bereits erwähnt, hat die Zylinderlinse in der Viertelkreiszone Z1 die kürzeste Brennweite und die Achse dieses Zylinders verläuft vertikal. Dies bedeutet, dass der Hauptschnitt der Zylinderlinse mit der höchsten Wirkung horizontal verläuft, während der Hauptschnitt der Zylinderlinse mit der geringsten Wirkung, als Zylinderachse bezeichnet, in vertikaler Richtung liegt. Aus diesem Grunde wird der Anteil des Lichtes von der Lichtquelle 2, der durch die Viertelkreiszone Z1 aus der Strahlformungsoptik austritt, im Abstand S1 eine vertikale strichförmige Beleuchtungslinie hervorrufen. Die Lichtanteile, welche durch die Viertelkreiszone Z2 bis Z4 austreten, überlagern dabei diese vertikale, strichförmige Beleuchtungslinie. Da die Querschnitte dieser Lichtanteile aus den Viertelkreiszonen Z2 bis Z4 jedoch im Abstand S1 einen relativ großen Querschnitt haben, wird lediglich der Kontrast der vertikalen strichförmigen Beleuchtungslinie etwas verringert, was jedoch zu keiner entscheidenden Beeinträchtigung führt.

Analog zu dieser am Beispiel der Viertelkreiszone Z1 beschriebenen Situation verhält es sich auch bei den anderen Viertelkreiszonen, in denen die jeweils dort eingesetzten Zylinderlinsen eine zunehmend geringere Brechkraft besitzen und bei denen eine um jeweils 45° gedrehte Zylinderachslage vorhanden ist. Auf diese Weise entstehen im Abstand S2, S3 und S4 jeweils weitere strichförmige Beleuchtungslinien mit unterschiedlicher Ausrichtung. In den Zwischenbereichen, d. h. zwischen z. B. S2 und S3, wird sich das Beleuchtungsmuster mit einem gewissen Unschärfebereich kontinuierlich von einer zur nächsten Beleuchtungslinienausrichtung verändern.

Befindet sich nun ein Objekt innerhalb des Messbereiches 5, so wird auf diesem Objekt, in Abhängigkeit vom Abstand zum Entfernungsmessgerät, ein unterschiedliches Beleuchtungsmuster erzeugt. Dieses Beleuchtungsmuster wird von dem Bildaufnehmer 10 dadurch erfasst, dass die Empfängeroptik 11 dieses Beleuchtungsmuster auf dem Detektorarray 12 abbildet. Damit dieser Abbildungsvorgang mit ausreichender Güte über den gesamten Messbereich 5 erfolgen kann, besitzt die Empfängeroptik 11 eine große Schärfentiefe.

Das auf dem Detektorarray 12 abgebildete, abstandsabhängige Beleuchtungsmuster wird einer nicht dargestellten Signalverarbeitungseinheit zugeführt. In dieser Signalverarbeitungseinheit wird mit Hilfe eines Bildverarbeitungsverfahrens ermittelt, welche aktuelle Beleuchtungslinienausrichtung vorliegt. Über den Vergleich mit einem zuvor gespeicherten Linienmuster ist das Entfernungsmessgerät somit in der Lage, den Abstand des Objektes zum Entfernungsmessgerät zu ermitteln.

## Patentansprüche

1. Optoelektronisches Entfernungsmessgerät mit einer Beleuchtungseinheit (1), die das Licht einer Lichtquelle (2) mittels einer dazu ausgerichteten Sendeoptik (3, 4.1, 4.2) in einen Messbereich (5) lenkt sowie einem Bildaufnehmer (10), bestehend aus einer Empfängeroptik (11), die ein Abbild von einem Objekt, das sich innerhalb des Messbereichs (5) befindet, auf einem Detektorarray (12) erzeugt und einer Signalverarbeitungseinheit, mit der die Empfangssignale vom Detektorarray (12) ausgewertet werden, **dadurch gekennzeichnet, dass** die Sendeoptik (3, 4.1, 4.2) mit einer Strahlformungsoptik (4), die aus einer in mehrere räumlich getrennte, jedoch auf eine Gesamtachse zentrierten Mehrzonenoptik (4) besteht, wobei jede Zone (Z1 bis Z4) eine von den anderen Zonen (Z1 bis Z4) abweichende Strahlformungseigenschaft und unterschiedliche Brennweite aufweist, ausgestattet ist, die in unterschiedlichen Messabständen (S1 bis S4) unterschiedliche Beleuchtungsmuster auf den Objekten erzeugt und dass in der Signalverarbeitungseinheit Mittel vorhanden sind, um aus der Abbildung dieser Beleuchtungsmuster eine Entfernungsangabe für den Abstand (S1 bis S4) des Objektes zum Entfernungsmessgerät zu generieren.

2. Optoelektronisches Entfernungsmessgerät nach Anspruch 1, **dadurch gekennzeichnet, dass** die einzelnen Zonen (Z1 bis Z4) die Form von Kreissegmenten oder Ringen aufweisen.

3. Optoelektronisches Entfernungsmessgerät nach Anspruch 1 **dadurch gekennzeichnet, dass** jeder Zone (Z1 bis Z4) eine Zylinderlinse mit einer zu den anderen Zylinderlinsen unterschiedlichen Brennweite und Zylinderachslage zugeordnet ist.

4. Optoelektronisches Entfernungsmessgerät nach Anspruch 3, **dadurch gekennzeichnet, dass** die Mehrzonenoptik (4) auf den Objekten ein linienförmiges Beleuchtungsmuster erzeugt, das in Abhängigkeit vom Objektabstand (S1 bis S4) eine unterschiedliche Drehausrichtung aufweist.

## Claims

1. An optoelectronic distance measurement device having a lighting unit (1) which directs the light from a light source (2) into a measurement zone (5) by means of an optical transmitting system (3, 4.1, 4.2) aligned therewith as well as having an image taker (10) consisting of an optical receiving system (11) which generates an image of an object located inside the measurement zone (5) on a detector array (12) as well as of a signal processing unit with which the received signals of the detector array (12) are evaluated, **characterised in that** the optical transmitting system (3, 4.1, 4.2) is equipped with an optical beam-shaping system (4) which consists of a multi-zone optical system (4) having a plurality of spatially separate zones, but centred on a common axis, wherein each zone (Z1 to Z4) has a beam shaping property which differs from the other zones (Z1 to Z4) and a different focal length, said multi-zone optical system generating different lighting patterns on the objects at different measurement distances (S 1 to S4); and **in that** means are present in the signal processing unit to generate a distance value for the distance (S 1 to S4) of the object from the distance measurement device from the image of this lighting pattern.

2. An optoelectronic distance measurement device according to claim 1, **characterised in that** the individual zones (Z1 to Z4) have the shape of circle segments or rings.

3. An optoelectronic distance measurement device according to claim 1, **characterised in that** a cylindrical lens with a focal length and a cylinder axis orientation differing from the other cylindrical lenses is associated with each zone (Z1 to Z4).

4. An optoelectronic distance measurement device according to claim 3 **characterised in that** the multi-zone optical system (4) generates a linear lighting pattern on the objects which has a different rotational direction in dependence on the object distance (S1 to S4).

## Revendications

1. Télémètre optoélectronique avec une unité d'éclairement (1), qui dirige vers une zone de mesure (5) la lumière d'une source lumineuse (2) à l'aide d'une optique d'émission (3, 4.1, 4.2) orientée à cet effet, et avec un capteur d'images (10), composé d'une optique de réception (11), qui produit sur un réseau de détecteurs (12) une image d'un objet qui se trouve dans la zone de mesure (5), et d'une unité de traitement de signaux à l'aide de laquelle sont analysés les signaux de réception provenant du réseau de détecteurs (12), **caractérisé en ce que** l'optique d'émission (3, 4.1, 4.2) est équipée d'une optique de formation de faisceau (4) qui se compose d'une optique (4) subdivisée en plusieurs zones séparées dans l'espace mais centrées sur un axe commun, chaque zone (Z1 à Z4) présentant une propriété de formation du faisceau qui diffère des autres zones (Z1 à Z4) et une longueur focale différente et qui produit sur les objets des motifs d'éclairement différents à des intervalles de mesure (S1 à S4) différents, et **en ce qu'**il est prévu dans l'unité de traitement de signaux un moyen destiné à produire, à partir de l'image de ce motif d'éclairement, une indication de distance correspondant à la distance (S1 à S4) de l'objet par rapport au télémètre.

2. Télémètre optoélectronique selon la revendication 1, **caractérisé en ce que** les différentes zones (Z1 à Z4) prennent la forme de segments de cercle ou d'anneaux.

3. Télémètre optoélectronique selon la revendication 1, **caractérisé en ce que** chaque zone (Z1 à Z4) est associée à une lentille cylindrique ayant une longueur focale et une position de l'axe du cylindre qui diffèrent par rapport aux autres lentilles cylindriques.

4. Télémètre optoélectronique selon la revendication 3, **caractérisé en ce que** l'optique à zones multiples (4) produit sur les objets un motif d'éclairement linéaire qui présente une orientation en rotation qui diffère en fonction de la distance de l'objet (S1 à S4).
